Europäisches Patentamt

European Patent Office

Office européen des brevets

(19)

(11) Veröffentlichungsnummer: **0 008 466**
**B1**

(12) **EUROPÄISCHE PATENTSCHRIFT**

(45) Veröffentlichungstag der Patentschrift:
**28.07.82**

(21) Anmeldenummer: **79103175.0**

(22) Anmeldetag: **28.08.79**

(51) Int. Cl.³: **B 62 M 3/08**

(54) **Fahrradpedal.**

(30) Priorität: **28.08.78 US 937049**

(43) Veröffentlichungstag der Anmeldung:
**05.03.80 Patentblatt 80/5**

(45) Bekanntmachung des Hinweises auf die Patenterteilung:
**28.07.82 Patentblatt 82/30**

(84) Benannte Vertragsstaaten:
**AT BE DE FR IT NL SE**

(56) Entgegenhaltungen:
**GB-A-170 790**
**GB-A-366 726**
**GB-A-422 719**

(73) Patentinhaber: **Friedrich, Heinz, Längenhardstrasse 14, D-7800 Freiburg/Breisgau (DE)**

(72) Erfinder: **Mohr, Siegfried, Dipl.-Ing., 3311 Benton Street, Santa Clara, CA 95051 (US)**

(74) Vertreter: **Bardehle, Heinz, Dipl.-Ing., Herrnstrasse 15 Postfach 260251, D-8000 München 26 (DE)**

## Fahrradpedal

Die Erfindung bezieht sich auf ein Fahrradpedal, bei dem am Tretkurbelzapfen eine Fussstütze drehbar gelagert ist, die mit Haltebandmitteln versehen ist, welche durch Verstellmittel hinsichtlich ihrer Länge einstellbar ausgebildet sind und in einer eine Öffnung bildenden Lage gehalten werden.

Ein derartiges Fahrradpedal ist aus der GB-A-820 393 bekannt. Dieses Pedal ist mit einem Zehenhaken versehen, der sich vom Pedal aus nach vorn erstreckt und den Vorderfuss des Radfahrers taschenförmig einschliesst. Dieser Zehenhaken verschiebt den Schwerpunkt des bekannten Pedals derart nach vorn, dass, sobald der Fuss vom Pedal genommen wird, dieses sich wegdreht, wobei der taschenförmige Zehenhaken im wesentlichen vertikal nach unten hängt. Der Radfahrer muss, um seinen Fuss wieder in den Zehenhaken einzuschieben, das Pedal zunächst verdrehen, indem er gegen eine vom Pedal nach rückwärts herausragende Strebe drückt, wodurch der Zehenhaken zum Einschieben des Fusses in die Horizontallage gebracht wird. Dies stellt auf jeden Fall eine Unbequemlichkeit für den Radfahrer dar.

Der Erfindung liegt die Aufgabe zugrunde, das eingangs beschriebene Fahrradpedal so zu gestalten, dass es jederzeit in für das Einschieben des Fusses aufnahmebereiter Lage steht, auch wenn das betreffende Fahrrad abgestellt ist. Erfindungsgemäss geschieht dies dadurch, dass die Haltebandmittel als Doppelschleife in nebeneinanderliegender Beziehung derart ausgebildet und durch eine oberhalb der Drehachse der Fussstütze in deren Bereich verlaufende Versteifung nachgiebig gestützt sind, dass sie zusammen mit der Fussstütze einen unterhalb der Drehachse liegenden Schwerpunkt bilden, der die Fussstütze in einer etwa horizontalen Lage hält.

Durch diese Gestaltung wird erreicht, dass einerseits die Haltebandmittel für das Einschieben des Fusses jederzeit in hochgestellter Lage gehalten werden und anderseits durch die Ausbildung der Haltebandmittel als Doppelschleife diese mit ihren Verstellmitteln eine derartige Verlagerung des Schwerpunktes ermöglichen, dass dieser unterhalb der Drehachse liegt. Der so liegende Schwerpunkt sorgt dann dafür, dass sich das Pedal nach Wegnahme des Fusses des Radfahrers stets mit seiner Fussstütze in eine horizontale Lage einstellt.

Es ist weiterhin ein Fahrradpedal aus der GB-A-170 790 bekannt, bei dem ein Lederriemen mit 4 Enden an den Rahmen des Pedals angeschnallt ist. Der mittlere Bereich des Riemens verläuft oben über den Schuh des Radfahrers. Die vier Lederenden dienen dazu, den mittleren Bereich des Riemens über dem Pedal zu halten und das Einführen des Fusses zu ermöglichen. Bei dieser Riemenart ist eine Längenverstellung schwierig, insbesondere ist sie nicht während des Fahrens möglich.

Darüber hinaus ist es bekannt, Pedale derart auszuwuchten, dass der Schwerpunkt relativ zur Drehachse so liegt, dass das Pedal wie ein Pendel funktioniert. Es wird dann die den Fuss aufnehmende Fussstütze auch bei abgestelltem Fahrrad in der Horizontallage gehalten, und zwar unabhängig von der jeweiligen Drehlage der Kurbel. Pedale dieses Typs sind in der US-A-1 393 256, der FR-A-937 007 und der CH-A-259 019 offenbart. Die Gegenstände dieser Patentschriften enthalten jedoch keine Lederriemen bzw. Haltebänder, um den Fuss des Radfahrers auf das Pedal zu schnallen. Derartige Lederriemen bzw. Haltebänder sind jedoch insbesondere für das Rennfahren wünschenswert, da sie auch eine Kraftübertragung während desjenigen Teils des Kurbelumlaufs erlauben, währenddessen der Radfahrer den Fuss nach oben bewegt.

Schliesslich sei noch auf die GB-A-422 719 verwiesen, die ein Fahrradpedal offenbart, bei dem zwei Lederriemen mit ihren vier Enden seitlich neben dem Tretkurbelzapfen an der Fussstütze angeschraubt sind. Die Lederriemen sind dabei von ihren angeschraubten Enden her mit einer kurzen Federbandversteifung versehen, die nur so weit reicht, wie sich die Lederbänder etwa rechtwinklig von der Fussstütze weg erstrecken.

Das erfindungsgemässe Fahrradpedal gestaltet man zweckmässig so, dass Haltemittel die Doppelschleife so zusammenhalten, dass den Bändern eine Relativbewegung zueinander und eine Längsbewegung zur Längeneinstellung ermöglicht ist. Hierdurch wird eine gleichmässigere Verteilung der Reaktionskräfte erzielt.

Die Haltebandmittel werden zweckmässig so gestaltet, dass sie in einem freien Ende auslaufen, das mit einer Befestigungsschicht zum Befestigen des losen Endes an den Haltemitteln versehen ist. Hierdurch wird erreicht, dass vor allem beim Fahren das freie Ende nicht umherflattert.

Die Versteifung gestaltet man zweckmässig als Blattfeder. Diese lässt sich dann vorteilhaft im Inneren eines Haltebandes anordnen.

Als Material für die Haltebandmittel verwendet man zweckmässigerweise ein gewebtes Gurtband aus Kunststoff, wodurch sich die erforderliche Flexibilität für die Haltebandmittel ergibt. Als Verstellmittel kann man vorteilhaft ein Paar Ringe verwenden.

Um das Anziehen der Haltebandmittel zu erleichtern, ist an diesen ein Handgriff befestigt.

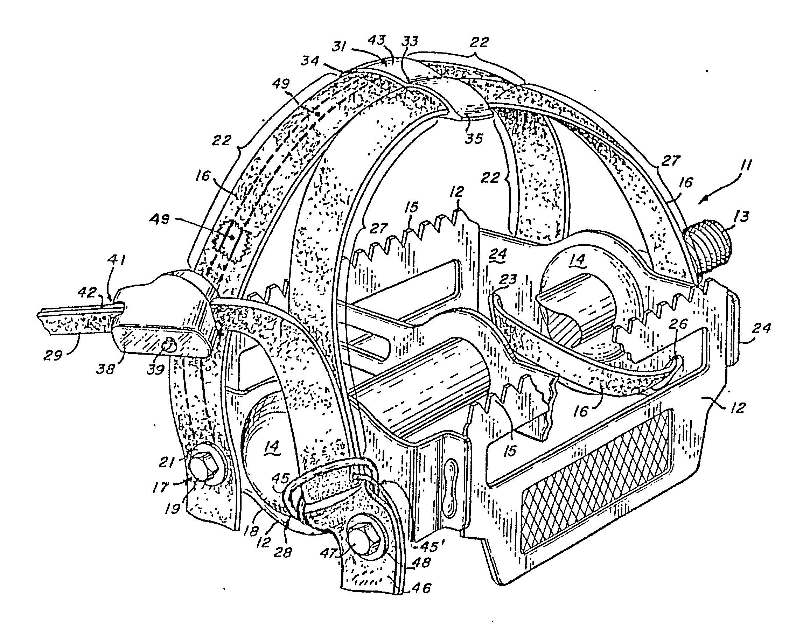

Ein Ausführungsbeispiel ist in der Figur dargestellt.

Die Figur zeigt das Fahrradpedal 11, das einen im wesentlichen rechteckigen Rahmenaufbau 12 aufweist, der von dem Tretkurbelzapfen 13 über Kugellager 14 getragen wird. Insofern weist das Pedal eine bekannte Konstruktion auf. Das Pedal hat eine Länge von 95 mm, eine Breite von 60 mm und ein Gewicht von 600 g.

Das Pedal 11 hat einen Schwerpunkt bezüglich seines Tretkurbelzapfens 13, so dass sich an dem Pedal ein Drehmoment ergibt, wodurch sich das Pedal von selbst in die Waagerechte einstellt. Die den Fuss aufnehmende Fussstütze 15 mit ihrer gezackten Oberkante liegt damit in der Horizontalen, wodurch das Einführen des Fusses erleichtert wird.

Die Haltebandmittel 16 bestehen aus einer Doppelschleife mit den Schleifenteilen 22 und 27, deren eines Ende 17 fest an das in Querrichtung verlaufende Aussenbindeglied 18 des Rahmens 12 mittels der Schraube 19 und der Unterlagsscheibe 21 angeschraubt ist. Das Schleifenteil 22 wird dann über die Fussstütze 15 geführt, und zwar im wesentlichen parallel zum Tretkurbelzapfen 13. Das Schleifenteil 22 ist dann durch den Schlitz 23 geführt, der sich in dem Innenbindeglied 24 des Rahmens 12 befindet. Es verläuft dann von dort aus parallel zu dem Innenbindeglied 24 unter dem Tretkurbelzapfen 13 zu dem zweiten Schlitz 26 in dem Innenbindeglied 24 und durch diesen hindurch. Von hier ab bildet es den zweiten Schleifenteil 27, der wiederum über die Fussstütze 15 verläuft, und zwar im wesentlichen parallel zum Tretkurbelzapfen 13. Das zweite Schleifenteil 27 verläuft dann durch die Verstellmittel 28 bis zu seinem losen Ende 29.

Die beiden Schleifenteile 22 und 27 der Haltebandmittel 16 werden seitlich nebeneinander im wesentlichen in gleicher Höhe am Scheitelpunkt der beiden Schleifenteile mittels beide Schleifen umschliessender Haltemittel 31 gehalten. Die Haltemittel 31 bestehen aus einem Stoffgewebe und bilden durch eine Quernaht 33 jeweils für jedes Schleifenteil 22 bzw. 27 ein Öhr 34 bzw. 35, durch welche die Schleifenteile 22 bzw. 27 hindurchgefädelt sind. Die Öhre 34 und 35 sind bezüglich der Breite der Schleifenteile 22 und 27 entsprechend dimensioniert, um den Schleifenteilen 22 und 27 eine Längsbeweglichkeit zu geben, wodurch ein Anziehen beider Schleifenteile 22 und 27 durch Änderung von deren wirksamer Länge zwischen dem Ende 17 und dem von den Verstellmitteln 28 erfassten Schleifenteil 27 ermöglicht ist. Aufgrund der Fähigkeit der Haltebandmittel 16, mit ihren Schleifenteilen 22 und 27 durch die Haltemittel 31 und die Schlitze 24 und 26 hindurchzugleiten, stellen sich die Schleifenteile 22 und 27 auf die wirksamen Längen ein, die eine gleichmässige Verteilung der durch die Haltebandmittel 16 auf die Kontur des Fusses des Radfahrers ausgeübten Reaktionskräfte erzielen.

Die Halterung 31 besteht aus Velcro-Verschlussmaterial (Velcro = eingetragenes Warenzeichen), wobei das Verschlussgewebe nach oben gerichtet ist.

Es ist weiterhin der Handgriff 38 vorgesehen, durch dessen Schlitz 41 das lose Ende 29 der Haltebandmittel 16 geführt ist. Die Schraube 39 in dem Handgriff 38 durchdringt den Schlitz 41 zum Festklemmen an den Haltebandmitteln 16. Der Handgriff 38 kann von der Hand des Radfahrers erfasst werden und erleichtert das Anziehen der Haltebandmittel 16 von deren losem Ende 29 her. Das lose Ende 29 ist ebenfalls mit Velcro-Befestigungsmaterial 42 versehen, und zwar durch Einschieben in den Handgriff 38, so dass dieser das Material mit festhält. Aufgrund dieser Gestaltung des losen Endes 29 und der Haltemittel 31 kann das lose Ende 29 nach dem Verstellen der Haltebandmittel 16 an den Haltemitteln 31 befestigt werden, und zwar mittels der eingreifend zusammenpassenden Velcro-Verschlussglieder 42 und 43. Das lose Ende 29 wird hierdurch daran gehindert, beim Fahren frei herumzuflattern. Dies dient auch dazu, den Schwerpunkt des Pedals 11 in dem gewünschten Punkt zu halten, so dass das Pedal 11 mit den daran befestigten Haltebandmitteln 16 ständig als sich selbst aufrichtende Gesamtheit funktioniert.

Die Verstellmittel 28 enthalten ein Paar Ringe 45, 45', die im wesentlichen konzentrisch zueinander stehen und am Aussenbindeglied 18 des Rahmens 12 auf dessen dem Ende 17 der Haltemittel 16 gegenüberliegender Seite angeschraubt sind. Hierzu dient das die Ringe 45 und 45' haltende Schleifenstück 46, das mit der Schraube 47 und der Unterlagscheibe 48 an das Aussenbindeglied 18 angeschraubt ist. Das Schleifenstück 46 besteht aus dem gleichen Material wie die Haltebandmittel 16. Das zweite Scheifenteil 27 ist dabei um den äusseren Ring 45' herumgeschlungen, wobei das lose Ende dieses Schleifenteils 27 zwischen den Ringen 45' und 45 hindurchgeführt ist, wodurch eine Verstellmöglichkeit bekannter Art geschaffen wird. Sobald eine Zugspannung sowohl am losen Ende 29 als auch am zweiten Schleifenteil 27 auftritt, ziehen sich die Verstellmittel 28 zusammen, um die eingestellte Lage der Schleifenteile 22 und 27 festzuhalten. Infolge der Fähigkeit der Haltebandmittel 16, durch die Schlitze 24 und 26 und die Haltemittel 31 hindurchzugleiten, stellt sich die Grösse der Schleifenteile 22 und 27 automatisch ein, so dass sie im wesentlichen von gleicher Grösse sind. Ein Anziehen einer der beiden Schleifenteile bewirkt, dass beide Schleifenteile angespannt werden.

Die Schleifenteile 22 und 27 werden in ihrer in der Figur gezeigten, hochgestellten Lage über der den Fuss aufnehmenden Fussstütze 15 mittels der freitragenden Blattfeder 49 gehalten, welche an ihrem Einspannende an einem Ende des Aussenbindegliedes 18 des Rahmens 12 mittels der Schraube 19 und der Unterlagsscheibe 21 festgeschraubt ist. Bei der dargestellten Ausführungsform ist die Blattfeder 49 im Inneren des ersten Schleifenteiles 22 untergebracht, welches aus einem flachen, schlauchartigen Nylongurtband (Nylon = eingetragenes Warenzeichen) besteht, das bei 12,7 mm Breite einen Zug von etwa 453 kg aushält. Gemäss einem typischen Anwendungsfall ist die Blattfeder 49 3,2 mm breit, 0,25 mm dick und 150 mm lang und besteht aus rostfreiem Stahl. Andere verwendbare Blattfedern bestehen aus federndem Nylon von 3,2 mm Breite, 0,76 mm Dikke und 150 mm Länge.

Die Blattfeder 49 kann auch über den Haltebandmitteln 16 angebracht sein. Sie wäre in diesem Falle mit den Haltebandmitteln 16 mittels Schleifen verbunden, die verschiebbar an der Blattfeder 49 anzubringen wären. Denkbar ist auch ein starres Wölbungsglied, an welcher die Haltebandmittel 16 mittels einer Vielzahl von dehnbaren Schleifen, z.B. aus Gummiband, aufzuhängen wären. Weiterhin besteht die Möglichkeit, die Blattfeder 49 aus einem nach aussen gewölbten, biegsamen Blatt elastischen Federmaterials zu formen, welches von dem Innenbindeglied 24 getragen wird, um eine oder beide Schleifenteile 22 bzw. 27 der Haltebandmittel 16 in der Hochlage zu halten. Das Blatt würde aus einem Stück bestehen oder könnte gegabelt sein und würde sich mit Anziehen der Haltebandmittel 16 an die Konturen des Fusses anschmiegen.

Es bestehen folgende weitere Alternativen für die Realisierung der Blattfeder: eine gewölbte freitragende Feder, die sich diagonal über die Länge des Pedals von einem Ende aus erstreckt und mittels einer Rutschschnalle mit einem Schleifenteil verbunden ist, wobei sich die Haltebandmittel zur Mitte des Aussenbindegliedes erstrecken; ein starrer Balken, der von dem Innenbindeglied aus sich über die Fussstütze erhebt, mit den am oberen Punkt des starren Balkens angebrachten Haltebandmitteln, die sich zum Aussenbindeglied erstrecken und die zum Einstellen ihrer wirksamen Länge zwischen dem starren Balken und dem Aussenbindeglied eine Verstellbefestigung enthalten; eine mit geraden Drahtenden versehene Zugfeder, die U-förmig seitlich über die Fussstütze gewölbt ist (Flexator-Feder, Flexator = eingetragenes Warenzeichen), und zwar im allgemeinen in der Ebene des Innenbindegliedes 24 liegt und mit den am oberen Punkt der U-förmigen Feder verbundenen Haltebandmitteln, die sich bis zu dem Aussenbindeglied erstrecken und eine Verstellbefestigung zum Einstellen der wirksamen Länge der Haltebandmittel enthalten.

In einem typischen Anwendungsfall wiegen die verstellbaren Haltebandmittel 16 einschliesslich Federn und Zubehör zwischen 25 und 30 g, sie bestehen aus relativ billigem Material. Die Haltebandmittel 16 mit Zubehör sind so angeordnet, dass ihre Momente nach Addition zu dem Moment des Pedals 12 die selbstaufrichtende Eigenschaft des Pedals nicht stören oder nachteilig beeinflussen. Wenn also die Fussstütze 15 horizontal liegt, befindet sich der Schwerpunkt der Gesamtheit des Pedals unter dem Tretkurbelzapfen 13, und zwar im allgemeinen in einer Vertikalebene mit dem Tretkurbelzapfen 13, wodurch sich die Selbstaufrichtung des Pedals ergibt, die das Einführen des Fusses in die Haltebandmittel 16 erleichtert.

Das erfindungsgemässe Fahrradpedal erlaubt also das Einführen des Fusses in das Pedal und die Haltebandmittel, ohne dass das Pedal hierzu ausgerichtet werden muss. Dies bedeutet Zeitersparnis bei Anfahrsituationen, was für Rennfahrer von Bedeutung ist. Die biegsamen Haltebandmittel bieten eine weiche und bequeme Druckverteilung an dem Fuss des Radfahrers, ohne dass sich Druckstellen ergeben, die eine frühe Ermüdung verursachen könnten. Hierdurch wird ein hoher Pedalwirkungsgrad erzielt.

Die niedrige Reibung des Nylon-Materials, welches für die Haltebandmittel verwendet wird, erlaubt ein schnelles Herausziehen des Fusses aus den straffen Haltebandmitteln, vor allem im Notfall. Das geringe Gewicht der Haltebandmittel mit Zubehör ergibt auch ein niedriges Trägheitsmoment, was für einen hohen Pedalwirkungsgrad wichtig ist. Schliesslich erlauben es die Verstellmittel, die Haltebandmittel während des Radfahrens anzuziehen.

## Patentansprüche

1. Fahrradpedal, bei dem am Tretkurbelzapfen (13) eine Fussstütze (15) drehbar gelagert ist, die mit Haltebandmitteln (16) verstehen ist, welche durch Verstellmittel (28) hinsichtlich ihrer Länge einstellbar ausgebildet sind und in einer eine Öffnung bildenden Lage gehalten werden, dadurch gekennzeichnet, dass die Haltebandmittel (16) als Doppelschleife (22, 27) in nebeneinanderliegender Beziehung derart ausgebildet und durch eine oberhalb der Drehachse (13) der Fussstütze (15) in deren Bereich verlaufende Versteifung (49) nachgiebig gestützt sind, dass sie zusammen mit der Fussstütze einen unterhalb der Drehachse (13) liegenden Schwerpunkt bilden, der die Fussstütze in einer etwa horizontalen Lage hält.

2. Fahrradpedal nach Anspruch 1, dadurch gekennzeichnet, dass Haltemittel (31) die Doppelschleife (22, 27) so zusammenhalten, dass den Bändern (22, 27) eine Relativbewegung zueinander und eine Längsbewegung zur Längeneinstellung ermöglicht ist.

3. Fahrradpedal nach Anspruch 2, dadurch gekennzeichnet, dass die Haltebandmittel (16) in einem freien Ende (29) auslaufen, das mit einer Befestigungsschicht (42) zum Befestigen des losen Endes (29) an den Haltemitteln (31) versehen ist.

4. Fahrradpedal nach einem der Ansprüche 1–3, dadurch gekennzeichnet, dass die Versteifung (49) als Blattfeder ausgebildet ist.

5. Fahrradpedal nach Anspruch 4, dadurch gekennzeichnet, dass die Blattfeder (49) im Inneren eines Haltebandes (22) angeordnet ist.

6. Fahrradpedal nach einem der Ansprüche 1–5, dadurch gekennzeichnet, dass die Haltebandmittel (16) aus einem gewebten Gurtband aus Kunststoff bestehen.

7. Fahrradpedal nach einem der Ansprüche 1–6, dadurch gekennzeichnet, dass die Verstellmittel (28) aus einem Paar Ringe (45, 45') bestehen.

8. Fahrradpedal nach einem der Ansprüche 1–7, dadurch gekennzeichnet, dass an den Haltebandmitteln (16) ein Handgriff (38) befestigt ist.

## Claims

1. Bicycle pedal with a foot platform (15) rotatably carried from spindle (13) and provided with retaining strap means (16) which are adjustable in their length by adjustment means (28) and are maintained in a position to provide an opening and thereby characterised that the retaining strap means (16) are formed in a double loop configuration (22, 27) in a side-by-side relation in such a manner that a supporting member (49) resiliently supports these above and along the axis of the spindle (13) of the foot platform (15) that in conjunction with the foot platform they create a combined center of gravity below the spindle axis (13), thereby maintaining the foot platform in an approximately horizontal position.

2. Bicycle pedal of claim 1, thereby characterised that holding means (31) are holding the double loop (22, 27) together while permitting relative translation of the strap means (22, 27) with respect to one another and longitudinal motion for length adjustment.

3. Bicycle pedal of claim 2, thereby characterised that retaining strap means (16) terminate in a loose end portion (29) which is provided with a fastening layer (42) for attaching the loose end portion (29) to the holding means (31).

4. Bicycle pedal of one of the claims 1 to 3, thereby characterised that the supporting member (49) consist of a leaf spring.

5. Bicycle pedal of claim 4, thereby characterised that the leaf spring (49) is disposed on the inside of one of the holding loops (22).

6. Bicycle pedal of one of the claims 1 to 5, thereby characterised that the retaining strap means (16) consist of woven tubular nylon webbing.

7. Bicycle pedal of one of the claims 1 to 6, thereby characterised that the adjustment means (28) consist of a pair of rings (45, 45').

8. Bicycle pedal of one of the claims 1 to 7, thereby characterised that a gripping member (38) is attached to the retaining strap means (16).

**Revendications**

1. Pédale pour bicyclettes dont un axe de pivotement (13) supporte à rotation un appui du pied (15) qui est pourvu des moyens de lanière de maintien (16) qui sont ajustables à l'égard de leur longueur par des moyens d'ajustage (28) qui sont tenus dans une position qui forme une ouverture, caractérisée de cette manière que les moyens de lanière (16) sont formés en double lanière (22, 27) en relation parallele et qui sont supportés élastiquement au-dessus et le long de l'axe de pivotement (13) de l'appui du pied (15) par un ressort de renfort (49) permettant que l'ensemble avec l'appui du pied forme un centre de gravité au-dessous de l'axe de pivotement (13) qui tient l'appui du pied dans une position horizontale.

2. Pédale pour bicyclettes selon revendication 1, caractérisée de cette manière que des moyens de retenue (31) maintiennent les doubles lanières (22, 27) d'une manière de leur permettre une translation relative entre les deux et un mouvement longitudinal pour l'ajustage de longueur.

3. Pédale pour bicyclettes selon revendication 2, caractérisée de cette manière que des moyens de lanière de maintien (16) ont une terminaison libre (29) qui est pourvue d'une couche de fixation (42) pour fixer l'élément libre (29) sur les moyens de retenue (31).

4. Pédale pour bicyclettes selon une des revendications 1 à 3, caractérisée de cette manière que le cantilever de renfort (49) est constitué comme un ressort à lâmes.

5. Pédale pour bicyclettes selon revendication 4, caracterisée de cette manière que le ressort à lâmes (49) est agencé à l'interieur d'une des lanières de maintien (22).

6. Pédale pour bicyclettes selon une des revendications 1 à 5, caractérisée de cette manière que les moyens de lanière de maintien (16) consistent de toile de sangle tubulaire en matière synthétique.

7. Pédale pour bicyclettes selon une des revendications 1 à 6, caractérisée de cette manière que les moyens d'ajustage (28) consistent d'une paire de boucles (45, 45').

8. Pédale pour bicyclettes selon une des revendications 1 à 7, caractérisée de cette manière que les moyens de lanière de maintien (16) portent une poignée (38).